# EUROPEAN PATENT SPECIFICATION

(11) **EP 2 947 316 B1**
(45) Date of publication and mention of the grant of the patent: **17.10.2018**
(21) Application number: 15160694.4
(22) Date of filing: 25.03.2015
(51) Int. Cl.: F03D 1/06, F03D 80/00

(54) **Wind turbine power generating apparatus**
Windturbinen-Stromerzeugungsvorrichtung
Appareil de génération de puissance d'une éolienne

(30) Priority: 22.05.2014 JP 2014105951
(43) Date of publication of application: 25.11.2015
(73) Proprietor: MITSUBISHI HEAVY INDUSTRIES, LTD., Tokyo 108-8215 (JP)
(72) Inventor: Numajiri, Tomohiro, Tokyo 108-8215 (JP)
(74) Representative: Intès, Didier Gérard André

(56) References cited:
- EP-A1- 2 154 361
- EP-A1- 2 826 991
- WO-A2-2010/133228
- WO-A2-2011/012664

## Description

### TECHNICAL FIELD

The present disclosure relates to a wind turbine power generating apparatus configured to generate electric power by utilizing wind energy.

### BACKGROUND

Wind turbine power generating apparatuses utilizing wind energy have drawn attention in recent years in view of preservation of the global environment. A wind turbine power generating apparatus generally includes a rotor in which a plurality of blades is mounted to a hub. The rotor rotates upon receiving wind at the blades, and rotation of the rotor is transmitted to a generator housed in a nacelle, the generator thereby generating electric power. The blades are normally coupled to the hub via a pitch bearing so as to be rotatable, so that angles of the blades with respect to wind are adjustable.

In such a wind turbine power generating apparatus, a spinner covering a hub and peripheral equipment of the hub is provided for the purpose of protecting the hub and the peripheral equipment of the hub mainly from storms, and securing a space for maintenance of the peripheral equipment of the hub. For instance, Patent Documents 1 and 2 describe a configuration of a wind turbine power generating apparatus including a spinner that covers a hub entirely. A spinner normally has openings for inserting blades mounted to the hub, and has a gap between rims of the openings and blade roots of the blades so as not to interrupt rotation in the pitch direction of the blades.

### Citation List

### Patent Literature

Patent Document 1: WO2011/012664A
Patent Document 2: KR2013-0102906A

EP 2 154 361 discloses another example of wind turbine generator.

### SUMMARY

Meanwhile, in a wind turbine power generating apparatus, workers occasionally perform works in a space between a hub and a spinner during maintenance of peripheral equipment of the hub. For instance, workers in the space between the hub and the spinner normally perform maintenance work. Specifically, the workers clench and tighten the bolts for attaching a pitch bearing to the hub, and attach and repair lightning protection components mounted around a blade root of a blade. At this time, a tool or a replacement part may occasionally fall into a gap between the spinner and the blade root of the blade. Such a fallen object moves around in the spinner in accordance with rotation of the spinner during operation of the wind turbine power generating apparatus, which may damage the spinner, the hub, the hub peripheral equipment, or the like. Thus, it is necessary to retrieve the fallen object before operation of the wind turbine power generating apparatus is started. However, it is difficult to retrieve a fallen object having fallen into a narrow and deep gap between the rim of the opening of the spinner and the blade root of the blade. Thus, efficiency of the maintenance work may decrease due to retrieval of the fallen object.

In this regard, for conventional wind turbine power generating apparatuses such as those described in Patent Documents 1 and 2, no technique has been proposed to improve a spinner structure from the perspective of improving efficiency of the maintenance work.

An object of some embodiments of the present invention is to provide a wind turbine power generating apparatus with a spinner structure that can contribute to improvement of efficiency of maintenance work for hub peripheral equipment.

A wind turbine power generating apparatus according to some embodiments of the present invention is defined in claim 1 and includes: at least one blade; a hub to which the at least one blade is mounted rotatably; and a spinner disposed so as to cover the hub, the spinner including a tubular part which extends around a rotational axis of the hub and which has an opening through which the blade extends. The tubular part of the spinner has a shape such that, when an intersection of the tubular part and a virtual cylinder surrounding the opening and extending along a blade root of the blade is projected on a plane (hereinafter, referred to as a "reference plane") including an axis of the blade and the rotational axis, a projection line of the intersection is within a range defined by a reference line connecting opposite ends of the projection line and a reference curve which is an intersection line, projected on the plane, of the virtual cylinder and a locus of the reference line rotating about the rotational axis.

The spinner of the above wind turbine power generating apparatus includes the tubular part extending around the rotational axis of the hub and having the opening through which the blade extends. At least a part of this tubular part in the direction of the rotational axis has a tubular shape centered at the rotational axis. The tubular part is not necessarily rotationally symmetric, but may have a shape equivalent to a rotationally-symmetric shape, which includes a partial bulge or recess with reference to a rotationally-symmetric shape (e.g. a cylindrical shape or a truncated cone shape).

According to the above wind turbine power generating apparatus, the shape of the tubular part of the spinner is set such that the projection line of the intersection of the tubular part and the virtual cylinder surrounding the opening of the tubular part, projected on the reference plane, is between the reference line and the reference curve. Here, the reference line is a line connecting opposite ends of the projection line, which defines the upper limit of the bulge of the spinner around the opening of the tubular part. On the other hand, the reference curve is a projection, projected on the reference plane, of an intersection line of the virtual cylinder and a locus (a cylinder or a truncated cone) of the reference line rotating about the rotational axis, which defines a lower limit of the bulge of the spinner around the opening of the tubular part.

As described above, the bulge of the spinner around the opening of the tubular part is set within an appropriate range, which makes it possible to reduce the length of the narrow gap between the rim of the opening of the tubular part and the blade root of the blade, the length taken in a direction of the blade axis, while ensuring an adequate work space between the hub and the spinner. Thus, even in the event of a fall of a tool, a replacement part, or the like into a gap between the spinner and the blade during maintenance, it is possible to easily retrieve the fallen object because the narrow gap between the rim of the opening of the tubular part and the blade root of the blade has a short length in the direction of the blade axis. As a result, it is possible to enhance efficiency of the maintenance work. Here, "the length of the narrow gap in the direction of the blade axis" corresponds to the distance between the intersection of the virtual cylinder and the tubular part and an optional plane orthogonal to the blade axis. The optional plane is, for instance, a plane passing through the opposite ends of the projection line.

The tubular part has a bulge at least around the opening, the bulge bulging outward from the locus in at least one part of a central region between the opposite ends of the projection line with respect to a direction of the rotational axis of the hub.

In this way, the projection line is positioned closer to the reference line than the reference curve is, which makes it possible to bulge the spinner around the opening of the tubular part and to reliably shorten the length of the narrow gap between the rim of the opening of the tubular part and the blade root of the blade in the direction of the blade axis. As a result, it is possible to improve the efficiency of the maintenance work even further.

In some embodiments, in the tubular part, a bulge amount of the bulge bulging outward from the locus increases with an increase in a distance from the opposite ends of the projection line, at least around the opening and in at least a part of the central region.

In this way, it is possible to have a length, in the direction of the blade axis, of the narrow gap between the rim of the opening of the tubular part and the blade root of the blade, which is more uniform in the circumferential direction of the opening of the tubular part. Thus, regardless of the position of the fallen object, retrieval of the fallen object is facilitated, and efficiency of the maintenance work is further enhanced.

The tubular part has a cross-sectional contour along a plane orthogonal to the rotational axis of the hub, in the at least one part of the central region, the cross-sectional contour having a distance from the rotational axis which varies in the circumferential direction of the rotational axis. A first distance between the rotational axis and the cross-sectional contour at a first position is longer than a second distance between the rotational axis and the cross-sectional contour at a second position, the second position being positioned farther from the opening than the first position is.

In this way, the cross-sectional contour of the tubular part along a plane orthogonal to the rotational axis of the hub, i.e., a cross-sectional area of the tubular part that is orthogonal to the main wind direction, is enlarged around the blade, which enhances the work efficiency inside the spinner around the blade and results in improved efficiency of the maintenance work.

In some embodiments, the tubular part has a cross-sectional contour along a plane orthogonal to the rotational axis of the hub, in the at least one part of the central region, the cross-sectional contour having a constant distance from the rotational axis in the circumferential direction of the rotational axis.

In this way, it is possible to ensure a large space between the spinner and the hub, which makes it possible to improve work efficiency in this space.

In some embodiments, the tubular part has a cylindrical shape or a truncated cone shape such that the projection line coincides with the reference curve.

The spinner includes a protruding portion disposed along a rim of the opening of the tubular part, the protruding portion extending toward a tip of the blade from the tubular part.

The protruding portion protrudes from the tubular part by a distance which varies along the rim of the opening so that an edge surface of the protruding portion disposed on a blade tip side extends over a plane orthogonal to the axis of the blade.

As described above, in a case where the tubular part has a cylindrical shape or a truncated cone shape such that the projection line coincides with the reference curve, manufacture of the spinner is facilitated. Further, with the protruding portion disposed along the rim of the opening of the tubular part and closer to the blade tip than the intersection part is, and with the edge surface of the protruding portion extending over a plane orthogonal to the blade axis, it is possible to easily achieve a structure for closing a gap between the protruding portion and the blade. This structure is, for instance, a sealing structure or a labyrinth structure. Thus, it is possible to reduce the risk of rainwater entering the spinner through the gap between the protruding portion and the blade.

In some embodiments, the spinner further includes a spinner-mounted cylindrical portion which is disposed over an entire periphery of a rim of the opening of the tubular part and which extends toward the tip end of the blade. The blade includes: an inner circumferential flange of a cylindrical shape mounted to an outer circumferential surface of the blade root; a flange connection portion extending from the inner circumferential flange outwardly in a radial direction of the blade; and an outer circumferential flange extending from the flange connection portion toward the spinner. The outer circumferential flange is disposed outside of the spinner-mounted cylindrical portion in the circumferential direction, so that at least a part of the outer circumferential flange overlaps with the spinner-mounted cylindrical portion in a direction of the axis of the blade.

According to the above embodiment, it is possible to prevent rainwater from entering the interior space of the spinner via the gap between the blade and the spinner. That is, when the tip end of the blade is positioned above the spinner, rainwater running down the blade toward the spinner flows down the flange connection portion and the outer circumferential flange of the blade and runs off at the outer side, in the radial direction of the blade, of the above gap. On the other hand, when the blade tip of the blade is disposed below the spinner, rainwater running down the spinner toward the tip end of the blade flows down the spinner-mounted cylindrical portion and runs off at the outer side, in the radial direction of the blade, of the above gap. At this time, even if there is residual rainwater in a gap between the spinner-mounted cylindrical portion and the outer circumferential flange, the rainwater flows out of the gap when the spinner rotates to turn upside down so that the tip end of the blade is positioned above the spinner. Thus, it is possible to prevent rainwater from entering the interior space of the spinner.

Further, according to the above embodiment, it is possible to receive grease or components used for equipment inside the spinner and the hub, for instance, at the flange connection portion and the outer circumferential flange, and to trap the grease or the components or the like inside the labyrinth space formed by the flange connection portion, the outer circumferential flange, and the spinner-mounted cylindrical portion.

In some embodiments, an outer circumferential side of the flange connection portion is inclined toward the spinner.

In this way, when the tip end of the blade is positioned above the spinner, rainwater flows down the flange connection portion and the outer circumferential flange of the blade, and smoothly runs off at the outer side, in the radial direction of the blade, of the above gap.

In some embodiments, the spinner includes a spinner-mounted recess portion disposed so as to extend outwardly in the radial direction of the blade from the spinner-mounted cylindrical portion and formed to have a cross section of a recess shape in the radial direction of the blade. The spinner-mounted recess portion is disposed so that a recessed surface of the spinner-mounted recess portion is facing and spaced from a distal end of the outer circumferential flange.

In this way, a labyrinth space having an even more complicated shape is formed by the spinner-mounted recess portion, the spinner-mounted cylindrical portion, the outer circumferential flange and the flange connection portion, which makes it possible to effectively prevent movement of fluid between the outside of the wind turbine power generating apparatus and a gap between the blade and the spinner.

In some embodiments, the blade is formed from a material including fiber-reinforced composite, and the inner circumferential flange is mounted to the blade with an adhesive agent.

In this way, it is possible to reduce the weight of the blade, and to easily attach the inner circumferential flange to the blade.

In some embodiments, at least a portion of the spinner-mounted cylindrical portion, the inner circumferential flange, the flange connection portion, or the outer circumferential flange has a structure dividable into at least two parts in a circumferential direction centered at the axis of the blade. Sections into which the at least one portion is divided are joined to one another at respective ends of the sections by adhesion or bolt fastening.

As described above, at least a portion of the spinner-mounted cylindrical portion, the inner circumferential flange, the flange connection portion, or the outer circumferential flange has a dividable structure. In this way, attachment to the spinner or the blade having a cylindrical shape is facilitated. Further, since the ends of the separate sections are joined to each other by adhesion or bolt fastening, it is possible to assemble the spinner efficiently.

In some embodiments, at least a portion of the spinner-mounted cylindrical portion, the inner circumferential flange, the flange connection portion or the outer circumferential flange has a structure dividable into at least two parts in a circumferential direction centered at the axis of the blade. Sections into which the at least one portion is divided are joined to one another at respective ends of the sections overlapped with each other.

As described above, at least a portion of the spinner-mounted cylindrical portion, the inner circumferential flange, the flange connection portion, or the outer circumferential flange has a dividable structure. In this way, attachment to the spinner or the blade having a cylindrical shape is facilitated.

Further, since the separate sections are joined to each other via their ends overlapping with each other, it is possible to prevent fluid from leaking out of the gap in the joint between the sections.

In the above embodiment, a gap can be formed between an outer circumferential surface of the spinner-mounted cylindrical portion and an inner circumferential surface of the outer circumferential flange. At least one of the spinner-mounted cylindrical portion or the outer circumferential flange has a structure dividable in the circumferential direction. The sections are overlapped with each other so that a joint between the sections has a flat surface facing the gap, in the at least one of the spinner-mounted cylindrical portion or the outer circumferential flange.

As described above, in a case where at least one of the spinner-mounted cylindrical portion or the outer circumferential flange has a structure dividable in the circumferential direction, the sections may be overlapped so that the joint between the sections has a flat surface facing the gap. In this way, it is possible to form the gap precisely.

In some embodiments, the spinner-mounted cylindrical portion is formed as a separate piece from the tubular part, and the spinner-mounted cylindrical portion is joined to the tubular part by adhesion or by flange connection.

In this way, it is possible to attach the spinner-mounted cylindrical portion to the tubular part easily.

In some embodiments, the spinner is dividable into at least two sections, and the spinner has at least one dividing plane which extends along the plane.

As described above, with the spinner configured to be dividable into at least two sections, it is possible to improve the manufacturability and transportability of the spinner. Further, with the dividing plane of the spinner extending along a plane including the axis of the blade and the rotational axis, the at least two sections are symmetric, and there may be formed sections having an identical shape, which makes it possible to improve the manufacturability of each section.

According to some embodiments of the present invention, the bulge of the spinner around the opening of the tubular part is set within an appropriate range, which makes it possible to reduce a length of a narrow gap extending between the rim of the opening of the tubular part and the blade root of the blade, while ensuring an adequate work space between the hub and the spinner. Thus, even in the event of a fall of a tool, a replacement part, or the like into a gap between the spinner and the blade during maintenance, it is possible to easily retrieve the fallen object because the depth of the narrow gap between the rim of the opening of the tubular part and the blade root of the blade is small. As a result, it is possible to improve efficiency of the maintenance work.

### BRIEF DESCRIPTION OF DRAWINGS

FIG. 1 is a schematic configuration diagram of a wind turbine power generating apparatus according to some embodiments.
FIG. 2 is a side view of an upper configuration of the wind turbine power generating apparatus according to some embodiments.
FIG. 3 is a side view for describing a spinner structure according to some embodiments.
FIG. 4A is a diagram for describing a spinner structure in a case where a rotational locus of a reference line has a cylindrical shape. FIG. 4B is a diagram for describing a spinner structure in a case where a rotational locus of a reference line has a truncated cone shape.
FIGs. 5A to 5C are a perspective view, a side view, and a front view as seen from the front side, of a spinner according to a first embodiment, respectively. FIG. 5D is a front view as seen from the front side of a spinner according to a variation of the first embodiment.
FIGs. 6A to 6C are a perspective view, a side view, and a front view as seen from the front side, of a spinner according to a second embodiment, respectively.
FIGs. 7A to 7C are a perspective view, a side view, and a front view as seen from the front side, of a spinner according to a third embodiment, respectively.
FIG. 8 is a cross-sectional view of an exemplary configuration of a spinner and a blade root of a blade.
FIG. 9 is a partial enlarged cross-sectional view of an exemplary configuration of a spinner and a blade root of a blade.
FIG. 10 is a planar view of an exemplary configuration of a spinner-mounted waterproof part.
FIG. 11 is a planar view of an exemplary configuration of a blade-mounted waterproof part.
FIG. 12A is a partial enlarged view of a joint structure of the blade-mounted waterproof part. FIG. 12B is a cross-sectional view taken along the line A-A of FIG. 12A.
FIG. 13 is a perspective view of an exemplary configuration of a spinner having a dividable structure.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

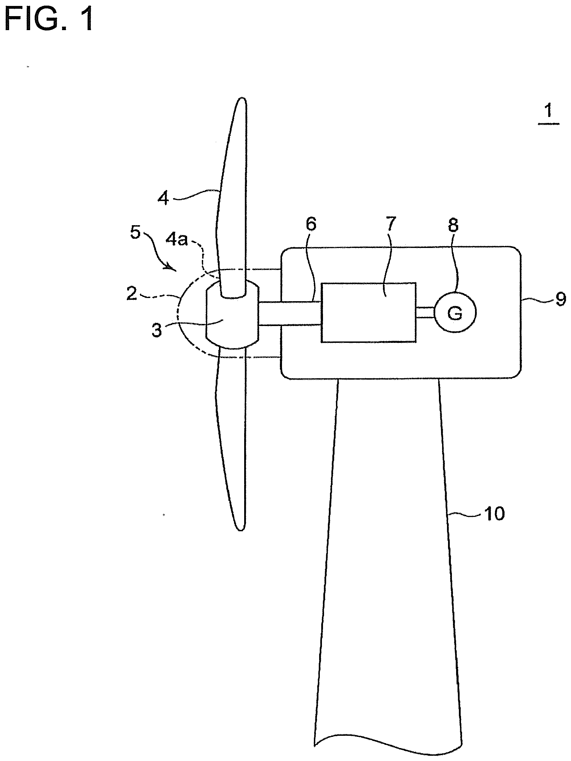

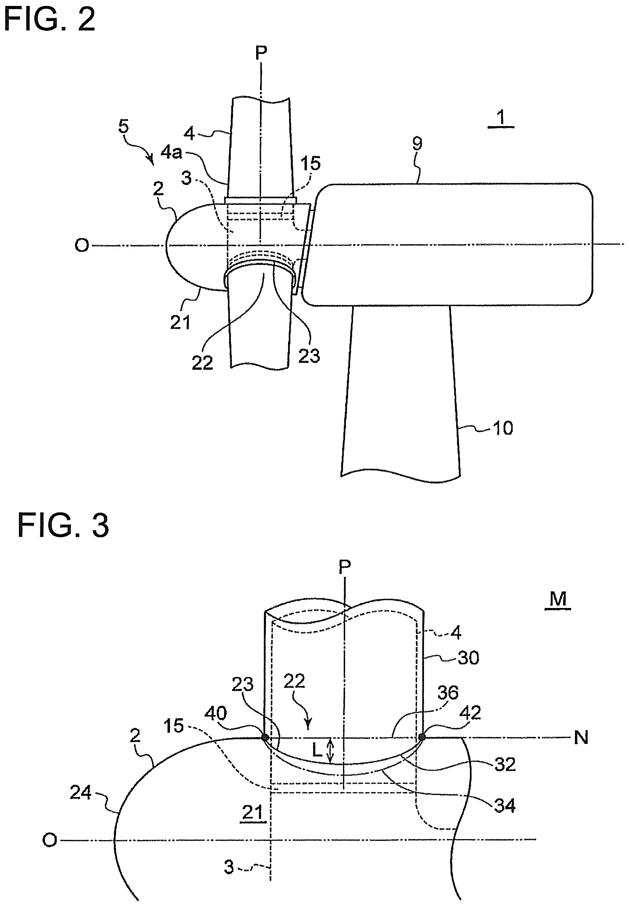

FIG. 1 is a schematic configuration diagram of a wind turbine power generating apparatus 1 according to some embodiments. FIG. 2 is a side view of an upper configuration of the wind turbine power generating apparatus 1 according to some embodiments.

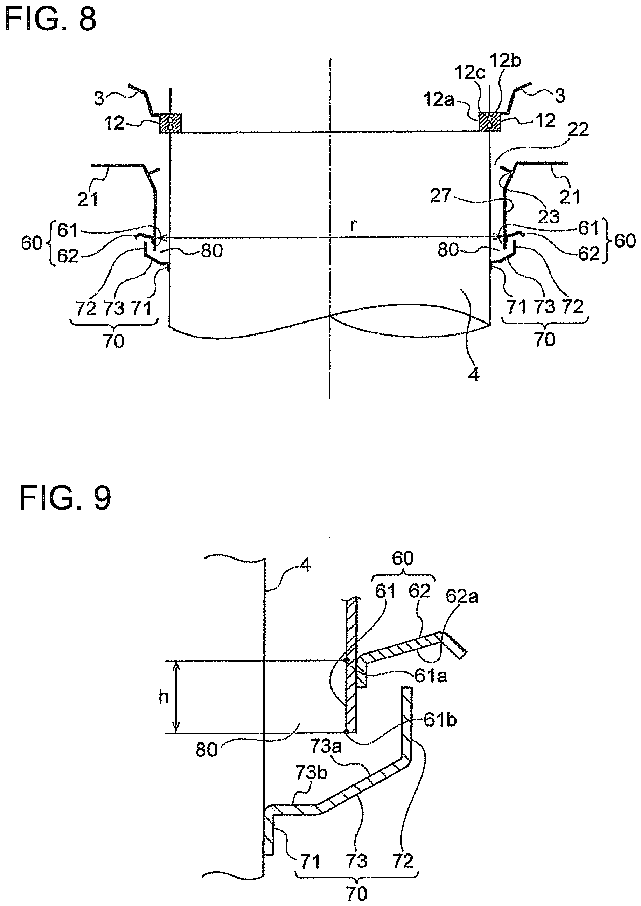

As illustrated in FIGs. 1 and 2, the wind turbine power generating apparatus 1 according to some embodiments includes at least one blade 4, and a hub 3 to which the at least one blade 4 is rotatably mounted. In the wind turbine power generating apparatus 1, the hub 3 and the at least one blade 4 make up a rotor 5. The blade 4 is mounted to the hub 3 rotatably in a pitch direction via a pitch bearing 15 including an inner race 15a and an outer race 15b (see FIG. 8). The rotor 5 is rotatably supported on the nacelle 9. The nacelle 9 is mounted to an upper end of a tower 10 built on the ground or on the ocean.

The wind turbine power generating apparatus 1 according to one embodiment includes a main shaft 6 coupled to the hub 3, a generator 8 configured to generate electric power utilizing rotation energy inputted from the rotor 5 via the main shaft 6, and a drivetrain 7 for transmitting the rotation of the main shaft 6 to the generator 8. As the drivetrain 7, a hydraulic transmission including a hydraulic pump and a hydraulic motor connected to each other via a high pressure oil line and a low pressure oil line may be used. Alternatively, a gearbox or a direct drive may be used.

The above wind turbine power generating apparatus 1 includes a spinner 2 for the purpose of protecting the hub 3 and the hub peripheral equipment mainly from storms, and securing a space for maintenance of the hub peripheral equipment. The spinner 2 is configured to cover the hub 3, the hub peripheral equipment, the blade root 4a of the blade 4, and the pitch bearing 15. The pitch bearing 15 is disposed in the interior space of the spinner 2 and along a plane orthogonal to the blade axis P of the blade 4.

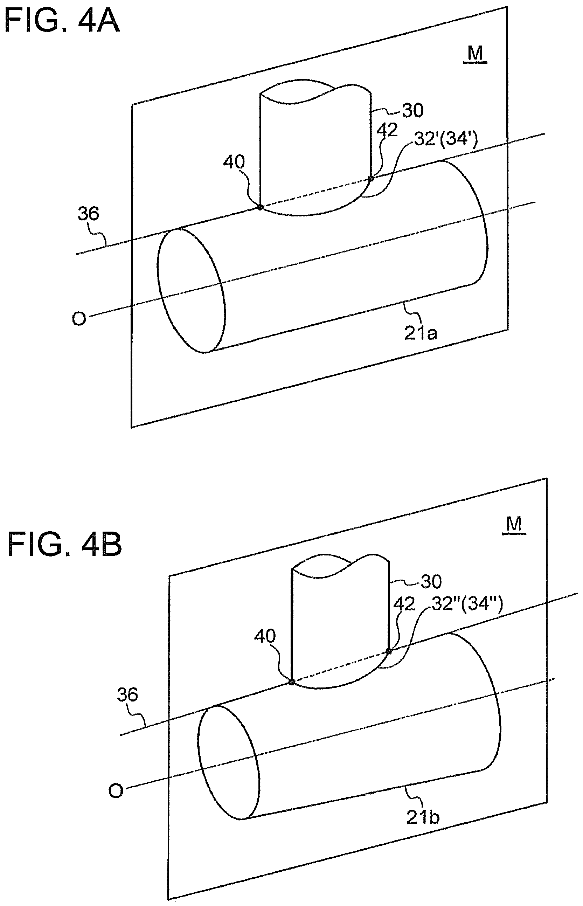

Now, the structure of the spinner 2 will be described with reference to FIGs. 2, 3, 4A and 4B. FIG. 3 is a side view for describing the structure of the spinner 2 according to some embodiments. FIG. 4A is a diagram for describing a projection line 32' in a case where a rotational locus 21a of a reference line 36 has a cylindrical shape. FIG. 4B is a diagram for describing a projection line 32" in a case where a rotational locus 21b of the reference line 36 has a truncated cone shape.

The spinner 2 of the wind turbine power generating apparatus 1 according to some embodiments includes a tubular part 21 extending around a rotational axis O of the hub 3 and including an opening 22 through which the blade 4 extends. The spinner 2 may be configured such that the front of the spinner 2 is closed by a front part 24 curved so as to have an outward convex shape. In one configuration example, the tubular part 21 and the front part 24 of the spinner 2 are formed as one piece. In another configuration example, the tubular part 21 and the front part 24 of the spinner 2 may be formed as separate pieces joined to each other by fastening such as flange fastening.

The tubular part 21 includes at least a portion, in the direction of the rotational axis O, having a tubular shape centered at the rotational axis O. The tubular part 21 does not necessarily have a completely rotational-symmetric shape, but may have a shape equivalent to a rotational-symmetric shape, which includes a partial bulge or recess with reference to a rotational-symmetric shape (e.g. a cylindrical shape or a truncated cone shape).

As illustrated in FIG. 3, an intersection line of the tubular part 21 of the spinner 2 and a virtual cylinder 30 encompassing the opening 22 of the spinner 2 and extending along the blade root 4a of the blade 4 is referred to as an intersection part. When this intersection part is projected on a reference plane M including the blade axis P of the blade 4 and the rotational axis O of the hub 3, a projection line 32 of the intersection part is formed. A line connecting opposite ends (a front end 40 and a rear end 42) of the projection line 32 is referred to as a reference line 36. Further, a curve obtained by projecting, on the reference plane M, an intersection of the virtual cylinder 30 and a locus (cylindrical or truncated cone shape) of rotation of the reference line 36 about the rotational axis O is referred to as a reference curve 34. For instance, as illustrated in FIG. 4A, in a case where the front end 40 and the rear end 42 are at identical distances from the rotational axis O, a locus 21a of rotation of the reference line 36 about the rotational axis O has a cylindrical shape. Here, the projection line 32' of the intersection line of the locus 21a and the virtual cylinder 30 projected on the plane M is the reference curve 34'. Further, as illustrated in FIG. 4B, in a case where the front end 40 is disposed at a shorter distance from the rotational axis O than the rear end 42 is, the locus 21b of rotation of the reference line 36 about the rotational axis O is a truncated cone shape. Here, the projection line 32" of the intersection line of the locus 21b and the virtual cylinder 30 projected on the plane M is the reference curve 34". In the present embodiment, a side closer to the hub 3 is referred to as the front, and a side closer to the nacelle 9 is referred to as the rear, in the direction of the rotational axis O of the hub 3. Accordingly, the front end 40 of the projection line 32 is an end at the front, and the rear end 42 is an end at the rear.

Referring again to FIG. 3, in the above wind turbine power generating apparatus 1, the tubular part 21 of the spinner 2 has a shape such that the projection line 32 is positioned within a range surrounded by the reference line 36 and the reference curve 34. In other words, the reference line 36 defines the upper limit of a bulge of the spinner 2 around the opening 22 of the tubular part 21, and the reference curve 34 defines the lower limit of a bulge of the spinner 2 around the opening 22 of the tubular part 21.

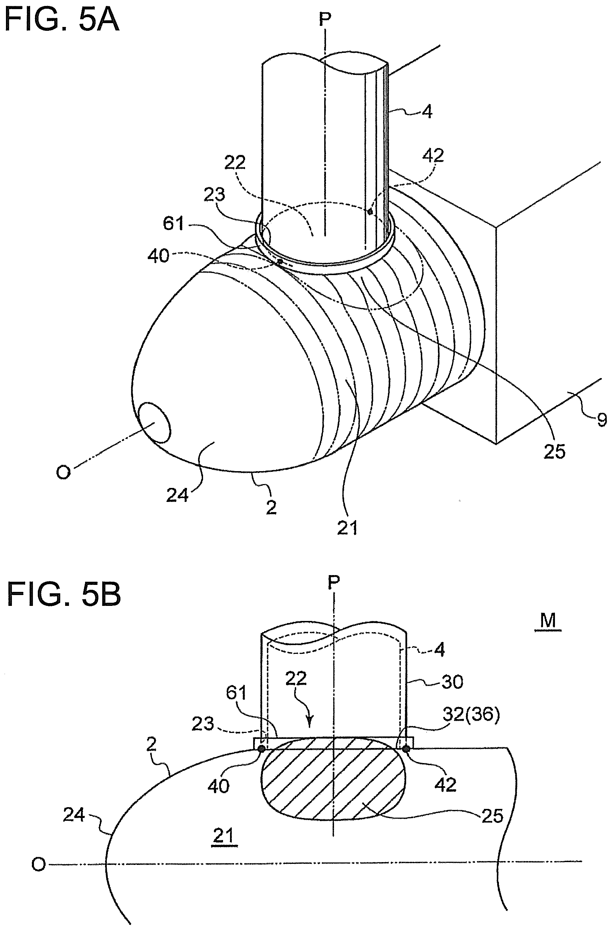

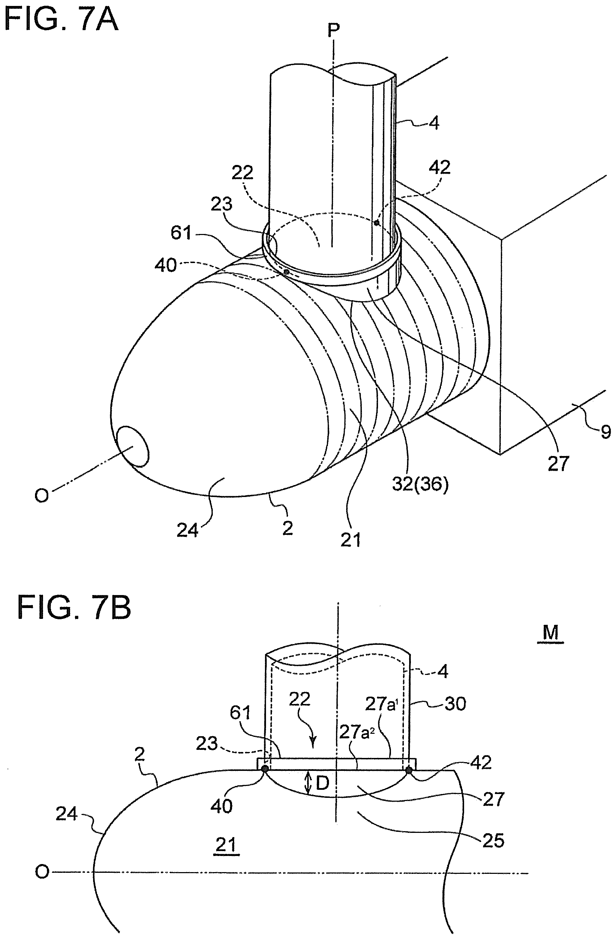

As described above, the bulge of the spinner 2 around the opening 22 of the tubular part 21 is set within an appropriate range, which makes it possible to reduce a length L, in a direction of the blade axis P, of a narrow gap between the rim 23 of the opening 22 of the tubular part 21 and the blade root 4a of the blade 4, while ensuring an adequate work space between the hub 3 and the spinner 2. Here, the length L in the direction of the blade axis P is a distance L between the intersection of the virtual cylinder 30 and the tubular part 21, the intersection corresponding to the projection line 32, and an optional plane N orthogonal to the blade axis P. Here, the plane N may be either a plane passing through the front end 40 and the rear and 42 of the intersection part as illustrated in FIG. 3, or a plane positioned closer to the tip end of the blade 4 than the plane passing through the front end 40 and the rear end 42 is. Further, the rim 23 is a portion defining the opening 22 of the tubular part 21. However, in a case where the spinner 2 includes a spinner-mounted cylindrical portion 61 as illustrated in FIGs. 5A and 5B, a portion including the inner circumferential surface of the spinner-mounted cylindrical portion 61 forms the rim 23. In a case where the spinner 2 includes a protruding portion 27 and the spinner-mounted cylindrical portion 61 as illustrated in FIGs. 7A and 7B, a portion including the inner circumferential surfaces of the protruding portion 27 and the spinner-mounted cylindrical portion 61 forms the rim 23.

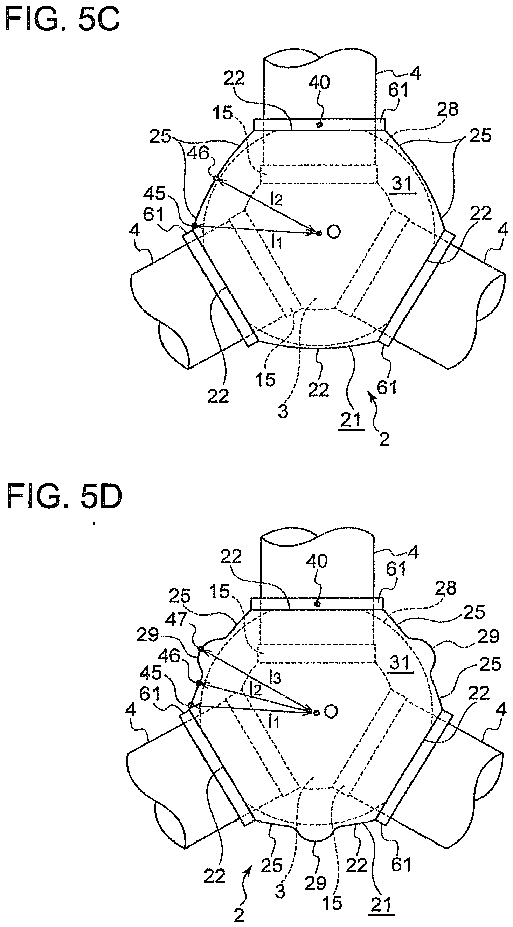

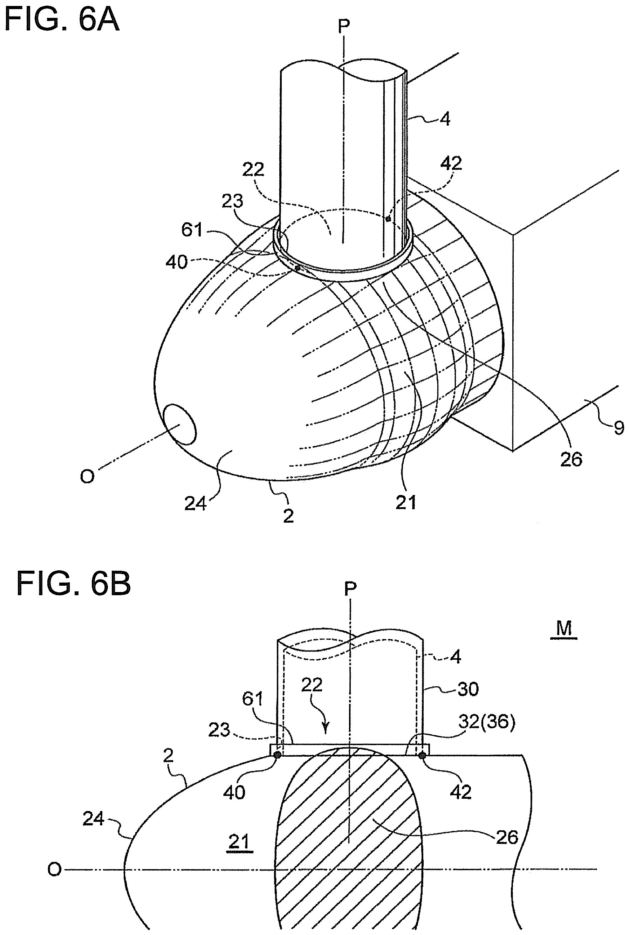

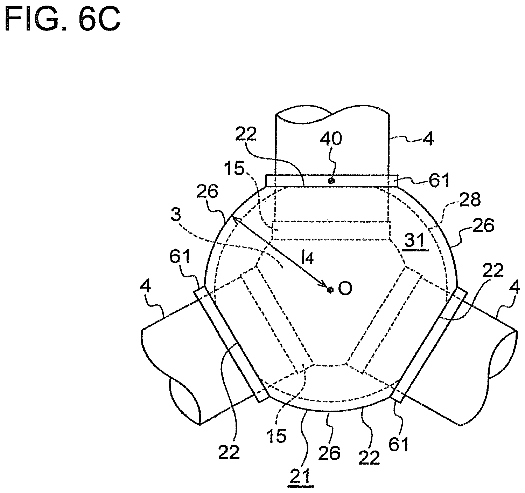

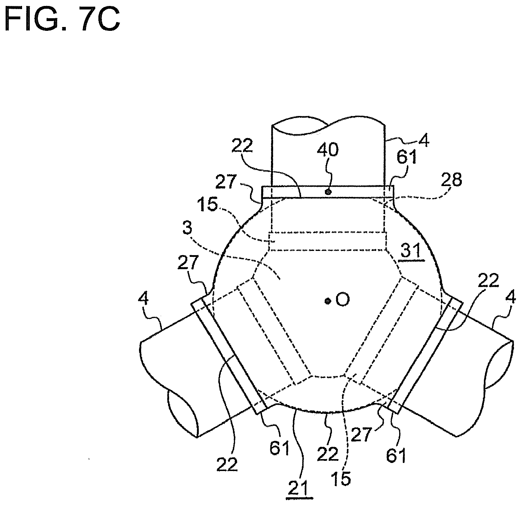

The length L, in the direction of the blade axis P, of a narrow gap formed between the rim 23 and the opening 22 of the tubular part 21 and the blade root 4a of the blade 4, i.e. a distance between the intersection part and the plane N, will be described specifically below, using the projection line 32. Here, the above narrow gap refers to, for instance, a gap formed between the outer circumferential surface of the blade root 4a and a portion of the spinner 2 disposed along the outer circumferential surface of the blade root 4a (e.g. the protruding portion 27 in FIG. 7C or the spinner-mounted cylindrical portion 61 in FIG. 8). In contrast, a relatively large space is normally formed between the outer circumferential surface of the blade root 4a and the inner circumferential surface of the tubular part 21 (for instance, a part 25 of a central region in FIG. 5C, or a central region part 26 in FIG. 6C), which leads to less limitations on the maintenance work.

Typically, the length L in the direction of the blade axis P of the narrow gap formed between the rim 23 of the opening 22 of the tubular part 21 and the blade root 4a of the blade 4 reaches its minimum at the front end 40 and the rear end 42 of the projection line 32, regardless of the amount of an outward bulge of the tubular part 21. In a case where the projection line 32 coincides with the reference line 36, the length L in the direction of the blade axis P of the narrow gap is constant in the circumferential direction of the opening 22 of the tubular part 21. That is, it is possible to shorten the length L of the narrow gap in the direction of the blade axis P evenly in the circumferential direction. On the other hand, in a case where the projection line 32 coincides with the reference curve 34, the length L in the direction of the blade axis P of the narrow gap increases at the central region between the front end 40 and the rear end 42, i.e., increases with a distance from the front end 40 or the rear end 42 in the direction of the rotational axis O. Further, in a case where the projection line 32 is positioned closer to the rotational axis O than the reference curve 34 is, the length L in the direction of the blade axis P of the narrow gap is long at the central region between the front end 40 and the rear end 42, and the distance between the pitch bearing 15 and the rim 23 of the opening 22 is too short, which makes it difficult to ensure a working space. In contrast, in a case where the length in the direction of the blade axis P of the narrow gap between the rim 23 of the opening 22 of the tubular part 21 and the blade root 4a of the blade 4 is short, it is possible to keep the position of the fallen component (for instance, a part such as a blade-mounted waterproof part 70 illustrated in FIGs. 8 and 9) having fallen into the narrow gap evenly closer to the spinner 2 even in the event of a fall of a tool, a replacement part, or the like into the narrow gap between the spinner 2 and the blade 4 during maintenance. As a result, it is possible to facilitate retrieval of the fallen object and to enhance efficiency of the maintenance work.

Hereinafter, each embodiment of the spinner shape will be described in detail.

FIGs. 5A to 5C are a perspective view, a side view, and a front view as seen from the front side, of a spinner according to the first embodiment, respectively. FIG. 5D is a front view as seen from the front side of a spinner according to a variation of the first embodiment.

The tubular part 21 of the spinner 2 in the first embodiment has a shape such that a part 25 of the central region between the front end 40 and the rear end 42 of the projection line 32 in the direction of the rotational axis O of the hub 3 bulges outward from the rotational locus 28 of the reference line 36, at least around the opening 22. The rotational locus 28 corresponds to the rotational locus 21a from FIG. 4A, or the rotational locus 21b from FIG. 4B, for instance. A space between the outer circumferential surface of the hub 3 and the inner circumferential surface of the spinner 2 may be used as a working space 31.

In this way, the projection line 32 is positioned between the reference line 36 and the reference curve 34 so that the spinner 2 bulges around the opening 22 of the tubular part 21, which makes it possible to reliably shorten the length L, in the direction of the blade axis P, of the narrow gap between the rim 23 of the opening 22 of the tubular part 21 and the blade root 4a of the blade 4. The length L here is, in other words, a distance between the intersection part and the plane N illustrated in FIG. 3. Further, the working space 31 between the outer circumferential surface of the hub 3 and the inner circumferential surface of the spinner 2 is enlarged due to the bulge of the tubular part 21 in the vicinity of the blade root 4a. Thus, it is possible to enhance efficiency of the maintenance work even further.

Further, the tubular part 21 may be configured such that the amount of the outward bulge from the rotational locus 28 increases at least around the opening 22 and at a part 25 of the central region, with a distance from the front end 40 and the rear and 42 of the projection line 32. In this way, it is possible to make the length L, in the direction of the blade axis P, of the narrow gap between the rim 23 of the opening 22 of the tubular part 21 and the blade root 4a of the blade 4 more uniform in the circumferential direction of the opening 22 of the tubular part 21. Thus, it is easier to retrieve a fallen object in the gap regardless of the position of the fallen object, which makes it possible to enhance efficiency of the maintenance work even further.

In one configuration, as illustrated in FIG. 5C, the distance between the rotational axis O and the cross-sectional contour of the tubular part 21 along a plane orthogonal to the rotational axis O of the hub 3 is varied in the circumferential direction of the rotational axis O, at a part 25 of the central region of the tubular part 21. Further, the first distance l₁ between the rotational axis O and the cross-sectional contour at the first position 45 on the outer circumferential surface of the tubular part 21 is longer than the second distance l₂ between the rotational axis O and the cross-sectional contour at the second position 46. The second position 46 is farther from the opening 22 than the first position 45 is. In this way, the cross-sectional contour of the tubular part 21 along a plane orthogonal to the rotational axis O of the hub 3, i.e., a cross-sectional area of the tubular part 21 that is orthogonal to the main wind direction, is enlarged around the blade 4, which enhances the work efficiency inside the spinner 2 around the blade 4 and results in improved efficiency of the maintenance work. In the above configuration example, it is sufficient if the above relationship is satisfied by the first distance l₁ at the first position 45 and the second distance l₂ at the second position 46 in at least a part of the central region of the tubular part 21. Thus, a specific bulge (e.g. a passage) may be disposed on the third position 47, which is different from the first position 45 and the second position 46. For instance, as in the variation example illustrated in FIG. 5D, the third distance l₃ between the rotational axis O and the cross-sectional contour at the third position 47 at the outer circumferential face of the tubular part 21 is longer than the first distance l₁ and the second distance l₂. The bulge of the tubular part 21 at the third position 47 is used as a working passage 29 for workers and components to move between the spinner 2 and the hub 3 during the maintenance work, for instance.

FIGs. 6A to 6C are a perspective view, a side view, and a front view as seen from the front side, of a spinner according to the second embodiment, respectively.

The tubular part 21 of the spinner 2 in the second embodiment has a shape such that a central region part 26 between the front end 40 and the rear end 42 of the projection line 32 in the direction of the rotational axis O of the hub 3 bulges outward from the rotational locus 28 of the reference line 36, at least around the opening 22. A space between the outer circumferential surface of the hub 3 and the inner circumferential surface of the spinner 2 may be used as a working space 31. Here, it is sufficient if at least a part of the central region part 26 between the front end 40 and the rear end 42 of the projection line 32 of the tubular part 21 has the outwardly-bulging shape.

In this way, the projection line 32 is positioned closer to the reference line 36 than the reference curve 34 is, which makes it possible to bulge the spinner 2 around the opening 22 of the tubular part 21 and to reliably shorten the length L, in the direction of the blade axis P, along which the narrow gap between the rim 23 of the opening 22 of the tubular part 21 and the blade root 4a of the blade 4 extends. The length L here is, in other words, the distance between the intersection part and the plane N illustrated in FIG. 3. Further, the working space 31 between the outer circumferential surface of the hub 3 and the inner circumferential surface of the spinner 2 is enlarged due to the bulge of the tubular part 21 in the vicinity of the blade root 4a. Thus, it is possible to enhance efficiency of the maintenance work even further.

Further, the distance l₄ between the rotational axis O and the cross-sectional contour of the tubular part 21 along a plane orthogonal to the rotational axis O of the hub 3 is constant in the circumferential direction of the rotational axis O, at the central region 27 between the front end 40 and the rear end 42 of the tubular part 21. That is, in the central region 27 in the direction of the rotational axis O, the cross-sectional contour of the tubular part 21 is formed to have a larger diameter than the rotational locus 28, and to be concentric with the rotational locus 28. In this way, it is possible to ensure a large size for the space 31 between the spinner 2 and the hub 3 between two adjacent blades 4, which makes it possible to enhance workability in the above space.

FIGs. 7A to 7C are a perspective view, a side view, and a front view as seen from the front side, of the spinner 2 according to the third embodiment, respectively.

The tubular part 21 of the spinner 2 in the third embodiment has a cylindrical shape or a truncated cone shape such that the projection line 32 coincides with the reference curve 34. Further, the spinner 2 includes a protruding portion 27 disposed along the rim 23 of the opening 22 of the tubular part 21. The protruding portion 27 extends toward the tip end of the blade 4 from the tubular part 21. Further, the protrusion distance D by which the protruding portion 27 protrudes from the tubular part 21 is varied over the rim 23 of the opening 22 so that the edge surface 27a₁ or 27a₂ of the protruding portion 27 disposed at the blade tip side of the blade 4 extends along a plane orthogonal to the blade axis P. Further, in a case where the spinner 2 has a labyrinth structure described below (see FIG 8), the edge surface 27a₁ of the spinner-mounted cylindrical portion 61 constituting the labyrinth structure is the edge surface of the protruding portion 27. Thus, the protrusion distance D refers to the distance from the tubular part 21 to the edge surface 27a₁ of the spinner-mounted cylindrical portion 61. On the other hand, in a case where the spinner 2 does not have a labyrinth structure, there is no spinner-mounted cylindrical portion 61, and thus the edge surface 27a₂ is the edge surface of the protruding portion 27. Thus, the protrusion distance D refers to the distance from the tubular part 21 to the edge surface 27a₂.

As described above, in a case where the tubular part 21 has a cylindrical shape or a truncated cone shape such that the projection line 32 coincides with the reference curve 34, manufacture of the spinner 2 is facilitated. Further, with the protruding portion 27 disposed along the rim 23 of the opening 22 of the tubular part 21 and closer to the blade tip than the intersection part is, and with the edge surface of the protruding portion 27 extending over a plane orthogonal to the blade axis P, it is possible to easily achieve a structure for closing a gap between the protruding portion 27 and the blade 4. This structure is, for instance, a sealing structure, or a labyrinth structure illustrated in FIG. 8. Thus, it is possible to reduce the risk of rainwater entering the spinner 2 through the gap between the protruding portion 27 and the blade 4.

As illustrated in FIGs. 8 and 9, the above wind turbine power generating apparatus 1 may further include the following configuration. FIG. 8 is a cross-sectional view of an exemplary configuration of a spinner and a blade root of a blade. FIG. 9 is a partial enlarged cross-sectional view of an exemplary configuration of a spinner and a blade root of a blade.

In the wind turbine power generating apparatus 1 according to one embodiment, the spinner 2 includes a spinner-mounted waterproof part 60, and the blade 4 includes a blade-mounted waterproof part 70. The spinner-mounted waterproof part 60 and the blade-mounted waterproof part 70 together form a labyrinth space 80 in a gap between the blade 4 and the spinner 2. The labyrinth space 80 prevents movement of fluid (e.g. rainwater or grease) from outside of the wind turbine power generating apparatus 1 to the gap between the blade 4 and the spinner 2, and vice versa.

The spinner-mounted waterproof part 60 is disposed along the entire periphery of the rim 23 of the opening 22 of the tubular part 21, and includes a spinner-mounted cylindrical portion 61 extending from the tubular part 21 toward the blade tip of the blade 4. Specifically, the spinner-mounted cylindrical portion 61 is formed in a cylindrical shape centered at the blade axis P, and disposed on the outer circumferential side of the blade root 4a of the blade 4. For instance, the spinner-mounted end portion 61a of the spinner-mounted cylindrical portion 61 is disposed on the first plane passing through the front end 40 and the rear end 42 of the projection line 32 and extending orthogonal to the blade axis P, while the blade-side end portion 61b of the spinner-mounted cylindrical portion 61 is disposed on the second plane parallel to the first plane and closer to the blade than the first plane is. In this case, the height "h" of the spinner-mounted cylindrical portion 61 (i.e., a distance between the first plane and the second plane) may be not less than 2% and not more than 10% of a diameter "r" of the spinner-side end portion of the spinner-mounted cylindrical portion 61. Setting the height "h" of the spinner-mounted cylindrical portion 61 within the above range prevents the length L of the narrow gap between the spinner 2 and the blade 4 from being excessively long due to the height "h" of the spinner-mounted cylindrical portion 61 additionally provided, while contributing to formation of the labyrinth space 80, thereby preventing a decrease in efficiency of the maintenance work.

The blade-mounted waterproof part 70 includes an inner circumferential flange 71 of a cylindrical shape attached to the outer circumferential surface of the blade root, a flange connection portion 73 extending outward in the radial direction of the blade 4 from the inner circumferential flange 71, and an outer circumferential flange 72 extending toward the spinner 2 from the flange connection portion 73. The outer circumferential flange 72 is disposed outside of the spinner-mounted circumferential portion 61 in the circumferential direction so that at least a part of the outer circumferential flange 72 overlaps with the spinner-mounted cylindrical portion 61 in the direction of the blade axis P. The inner circumferential flange 71 and the outer circumferential flange 72 may each have a cylindrical shape. The flange connection portion 73 may have an annular shape. Further, the flange connection portion 73 may be inclined toward the spinner 2 so that the outer circumferential side 73a is close to the spinner 2 as compared to the inner circumferential side 73b. In this way, in a case where the tip end of the blade 4 is positioned above the spinner 2, rainwater flows down the flange connection portion 73 and the outer circumferential flange 72 of the blade 4 and smoothly runs off at the outer side, in the radial direction of the blade 4, of the above gap. Further, in a case where the blade 4 is formed form a material including fiber reinforced composite such as carbon fiber reinforced composite and glass fiber reinforced composite, the inner circumferential flange 71 may be attached to the blade 4 with an adhesive agent.

In one configuration example, at least one of a pair of the inner circumferential flange 71 and the flange connection portion 73, or a pair of the outer circumferential flange 72 and the flange connection portion 73 may be formed as one piece. Further, the inner circumferential flange 71, the flange connection portion 73, and the outer circumferential flange 72, may be formed as one piece. In another configuration example, at least one of a pair of the inner circumferential flange 71 and the flange connection portion 73, or a pair of the outer circumferential flange 72 and the flange connection portion 73 may be formed as separate pieces joined to each other. Further, all of the inner circumferential flange 71, the flange connection portion 73, and the outer circumferential flange 72, may be formed as separate pieces joined to one another.

According to the above embodiment, it is possible to prevent rainwater from entering the interior space of the spinner 2 via the gap between the blade 4 and the spinner 2. That is, when the tip end of the blade 4 is positioned above the spinner 2, rainwater running down the blade 4 toward the spinner 2 flows down the flange connection portion 73 and the outer circumferential flange 72 of the blade 4 and runs off at the outer side, in the radial direction of the blade 4, of the above gap. On the other hand, when the blade tip of the blade 4 is disposed below the spinner 2, rainwater running down the spinner 2 toward the tip end of the blade 4 flows down the spinner-mounted cylindrical portion 61 and runs off at the outer side, in the radial direction of the blade 4, of the above gap. At this time, even if there is residual rainwater in a gap between the spinner-mounted cylindrical portion 61 and the outer circumferential flange 72, the rainwater flows out of the gap when the spinner 2 rotates to turn upside down so that the blade tip of the blade 4 is positioned above the spinner 2. Thus, it is possible to prevent rainwater from entering the interior space of the spinner 2.

Further, according to the above embodiment, it is possible to receive grease or components used for equipment inside the spinner 2 and the hub 3 at the flange connection portion 73 and the outer circumferential flange 72, and to trap the grease or the components inside the labyrinth space formed by the flange connection portion 73, the outer circumferential flange 72, and the spinner-mounted cylindrical portion 61.

In the above embodiment, the spinner-mounted water proof part 60 may further include a spinner-mounted recess portion 62 disposed so as to extend outward in the radial direction of the blade 4 from the spinner-mounted cylindrical portion 61 and formed to have a cross section of a recess shape in the radial direction of the blade 4. The spinner-mounted recess portion 62 is formed in an annular shape, and disposed so that a recessed surface 62a of the spinner-mounted recess portion 62 is facing and spaced from the distal end of the outer circumferential flange 72 of the blade-mounted water proof part 70.

In this way, a labyrinth space having an even more complicated shape is formed by the spinner-mounted recess portion 62, the spinner-mounted cylindrical portion 61, the outer circumferential flange 72 and the flange connection portion 73, which makes it possible to effectively prevent movement of fluid from the outside of the wind turbine power generating apparatus 1 to a gap between the blade 4 and the spinner 2, and vice versa.

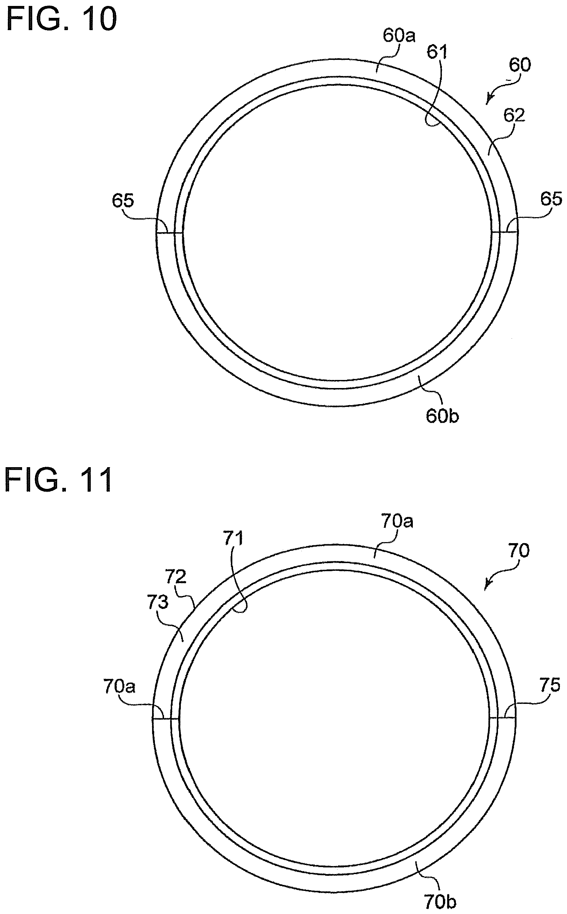

FIG. 10 is a planar view of an exemplary configuration of the spinner-mounted waterproof part 60.

In the spinner-mounted waterproof part 60 of one configuration example, at least a portion of one of the spinner-mounted cylindrical portion 61 or the spinner-mounted recess portion 62 has a structure dividable into at least two pieces in the circumferential direction centered at the blade axis P. In the example illustrated in the drawing, the spinner-mounted cylindrical portion 61 or the spinner-mounted recess portion 62 is formed as one piece, and is divided into sections 60a, 60b at a dividing line 65. The sections 60a, 60b may be joined to each other at the ends by adhesion or bolt fastening. In this way, attachment to the spinner 2 having a cylindrical shape is facilitated. Further, since the ends of the separate sections 60a, 60b are joined to each other by adhesion or bolt fastening, it is possible to assemble the spinner 2 efficiently. Further, the spinner-mounted cylindrical portion 61 may be formed as a separate piece from the tubular part 21, and joined to the tubular part 21 by adhesion or by flange connection. In this way, it is possible to facilitate attachment of the spinner-mounted cylindrical portion 61 to the tubular part 21.

FIG. 11 is a planar view of an exemplary configuration of the blade-mounted waterproof part 70.

In the blade-mounted waterproof part 70 of one configuration example, at least a portion of the inner circumferential flange 71, the flange connection portion 73, or the outer circumferential flange 72 has a structure dividable into at least two pieces in the circumferential direction centered at the blade axis P. In the example illustrated in the drawing, the inner circumferential flange 71, the flange connection portion 73, or the outer circumferential flange 72 is formed as one piece, and divided into sections 70a, 70b at a dividing line 75. The sections 70a, 70b may be joined to each other at their ends by adhesion or bolt fastening. In this way, attachment to the blade 4 having a cylindrical shape is facilitated. Further, since the ends of the separate sections 70a, 70b are joined to each other by adhesion or bolt fastening, it is possible to assemble the spinner 2 efficiently.

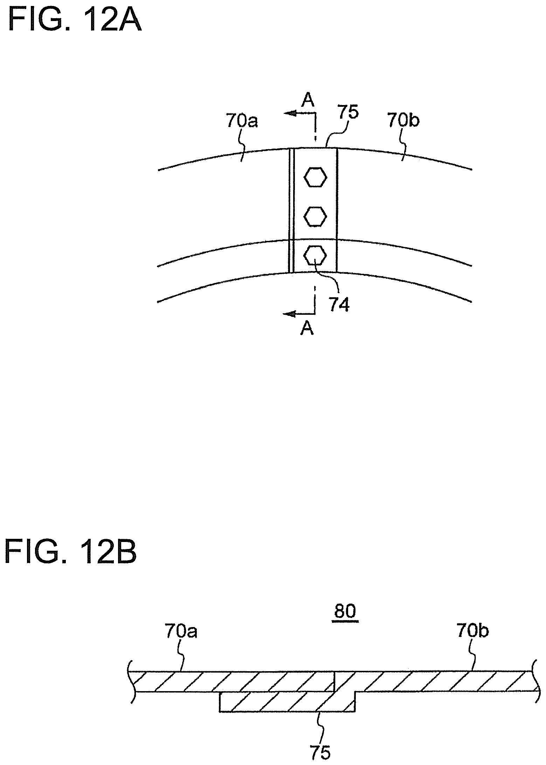

FIG. 12A is a partial enlarged view of a joint structure of the blade-mounted waterproof part 70. FIG. 12B is a cross-sectional view taken along the line A-A of FIG. 12A.

As illustrated in the drawings, in the blade-mounted waterproof part 70 of the other configuration example, at least a portion of the inner circumferential flange 71, the flange connection portion 73, or the outer circumferential flange 72 has a structure dividable into at least two pieces in the circumferential direction centered at the blade axis P, and the separate sections 70a, 70b are joined to each other via their ends overlapping with each other. In this way, since at least a portion of the inner circumferential flange 71, the flange connection portion 73, or the outer circumferential flange 72 has a dividable structure, attachment to the blade 4 having a cylindrical shape is facilitated. Further, since the separate sections 70a, 70b divided at the dividing line 75 are joined to each other via their ends overlapping with each other, it is possible to prevent fluid from leaking out of the gap in the joint between the sections 70a, 70b. Further, for at least one of the outer circumferential flange 72, the sections may be overlapped so that the joint between the sections 70a, 70b has a flat surface facing the gap. In this way, it is possible to form the labyrinth space 80 precisely.

Further, the above configuration may be applied to the spinner-mounted waterproof part 60.

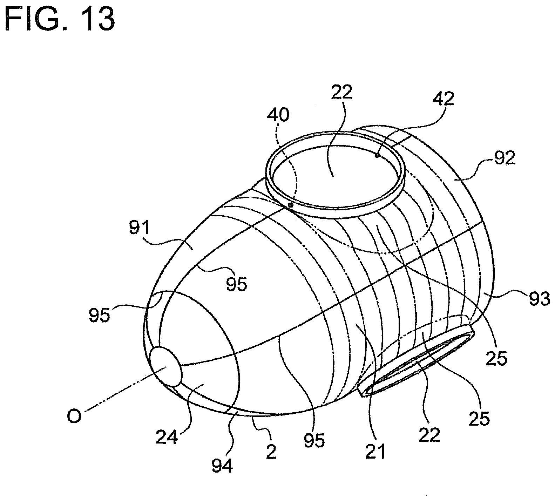

FIG. 13 is a perspective view of an exemplary configuration of a spinner having a dividable structure.

As illustrated in the drawing, the spinner 2 is configured to be dividable into at least two sections 91 to 94. At least one dividing plane 95 of the spinner 2 is along the reference plane M including the blade axis P and the rotational axis O of the hub 3. As described above, with the spinner 2 configured to be dividable into the at least two sections 91 to 94, it is possible to improve the manufacturability and transportability of the spinner 2. Further, with the dividing plane 95 of the spinner 2 extending along the reference plane M, at least two sections 91, 92 are symmetric, and there may be formed sections 91, 93 having an identical shape. As a result, it is possible to improve manufacturability of each section 91 to 94.

Further, if the spinner 2 is configured to be dividable into the at least two sections 91 to 94, the joint between the sections 91 to 94 into which the spinner 2 is divided may include a flat outer circumferential surface. In this way, it is possible to prevent an increase in air resistance on the outer circumferential surface of the spinner 2, which makes it possible to provide a spinner 2 with high aerodynamic performance.

As described above, the bulge of the spinner 2 around the opening 22 of the tubular part 21 is set within an appropriate range, which makes it possible to reduce a length L, in a direction of the blade axis P, along which a narrow gap between the rim 23 of the opening 22 of the tubular part 21 and the blade root 4a of the blade 4 extends, while ensuring an adequate work space between the hub 3 and the spinner 2. The length L is, in other words, a distance L between the intersection part and the plane N. Thus, even in the event of a fall of a tool, a replacement part, or the like into a narrow gap between the spinner 2 and the blade 4 during maintenance, it is possible to easily retrieve the fallen object and to enhance efficiency of the maintenance work, because it is possible to bring the position of the fallen object (e.g. a component of the blade-mounted water proof part 70 illustrated in FIGs. 8 and 9) having fallen into the narrow gap closer to the spinner 2 more evenly, if the length L in the direction of the blade axis P of the narrow gap between the rim 23 of the opening 22 of the tubular part 21 and the blade root 4a of the blade 4 is reduced.

Here, the expression "in the direction" used to describe the above embodiments does not only refer to being parallel to a reference direction or object in a geometrically strict sense, but includes having a certain angle (e.g. an angle not more than 30 degrees) from a reference direction or object.

Embodiments of the present invention were described in detail above, but the present invention is not limited thereto, and various amendments and modifications may be implemented within a scope that does not depart from the present invention, which is defined by the appended claims.

## Claims

1. A wind turbine power generating apparatus, comprising:
at least one blade (4);
a hub (3) to which the at least one blade (4) is mounted rotatably; and
a spinner (2) disposed so as to cover the hub (3), wherein the spinner includes a tubular part (21) which extends around a rotational axis (O) of the hub (3) and which has an opening (22) through which the blade (4) extends,
wherein the tubular part (21) of the spinner (2) has a shape such that, when an intersection of the tubular part (21) and a virtual cylinder (30) surrounding the opening (22) and extending along a blade root (4a) of the blade (4) is projected on a plane (M) including an axis (P) of the blade (4) and the rotational axis (O), a projection line (32, 32', 32") of the intersection is within a range defined by a reference line (36) connecting opposite ends (40, 42) of the projection line (32, 32', 32") and a reference curve (34, 34', 34") which is an intersection line, projected on the plane (M), of the virtual cylinder (30) and a locus (21a, 21b) of the reference line (36) rotating about the rotational axis (O),
wherein the tubular part (21) has a bulge at least around the opening (22), the bulge bulging outward from the locus (21a, 21b) in at least one part of a central region between the opposite ends (40, 42) of the projection line (32, 32' 32") with respect to a direction of the rotational axis (O) of the hub (3),
wherein the tubular part (21) has a cross-sectional contour along a plane orthogonal to the rotational axis (O) of the hub (3), in the at least one part of the central region, the cross-sectional contour having a distance from the rotational axis (O) which varies in the circumferential direction of the rotational axis, and
wherein a first distance (l₁) between the rotational axis (O) and the cross-sectional contour at a first position (45) is longer than a second distance (l₂) between the rotational axis (O) and the cross-sectional contour at a second position (46), the second position (46) being positioned farther from the opening (22) than the first position (45) is.

2. The wind turbine power generating apparatus according to claim 1,
wherein, in the tubular part (21), a bulge amount of the bulge bulging outward from the locus (21a, 21b) increases with an increase in a distance from the opposite ends (40, 42) of the projection line (32, 32' 32"), at least around the opening (22) and in at least a part of the central region.

3. The wind turbine power generating apparatus according to claim 1 or 2,
wherein the tubular part (21) has a cylindrical shape or a truncated cone shape such that the projection line (32, 32', 32") coincides with the reference curve (34, 34' 34"),
wherein the spinner (2) includes a protruding portion (27) disposed along a rim (23) of the opening (22) of the tubular part (21), the protruding portion (27) extending toward a tip of the blade (4) from the tubular part (21), and
wherein the protruding portion (27) protrudes from the tubular part (21) by a distance which varies along the rim (23) of the opening (22) so that an edge surface of the protruding portion (27) disposed on a blade tip side extends over a plane orthogonal to the axis (P) of the blade (4).

4. The wind turbine power generating apparatus according to any one of claims 1 to 3,
wherein the spinner (2) further includes a spinner-mounted cylindrical portion (61) which is disposed over an entire periphery of a rim (23) of the opening (22) of the tubular part (21) and which extends toward the tip of the blade (4),
wherein the blade (4) includes:
an inner circumferential flange (71) of a cylindrical shape mounted to an outer circumferential surface of the blade root (4a);
a flange connection portion (73) extending from the inner circumferential flange (71) outwardly in a radial direction of the blade (4); and
an outer circumferential flange (72) extending from the flange connection portion (73) toward the spinner (2), and
wherein the outer circumferential flange (72) is disposed outside of the spinner-mounted cylindrical portion (61) in the circumferential direction, so that at least a part of the outer circumferential flange (72) overlaps with the spinner-mounted cylindrical portion (61) in a direction of the axis (O) of the blade (4).

5. The wind turbine power generating apparatus according to claim 4,
wherein an outer circumferential side of the flange connection portion (73) is inclined toward the spinner (2).

6. The wind turbine power generating apparatus according to claim 4 or 5,
wherein the spinner (2) includes a spinner-mounted recess portion (62) disposed so as to extend outwardly in the radial direction of the blade (4) from the spinner-mounted cylindrical portion (61) and formed to have a cross section of a recess shape in the radial direction of the blade (4), and
wherein the spinner-mounted recess portion (62) is disposed so that a recessed surface of the spinner-mounted recess portion (62) is facing and spaced from a distal end of the outer circumferential flange (72).

7. The wind turbine power generating apparatus according to any one of claims 4 to 6,
wherein the blade (4) is formed from a material including fiber-reinforced composite, and
wherein the inner circumferential flange (71) is mounted to the blade (4) with an adhesive agent.

8. The wind turbine power generating apparatus according to any one of claims 4 to 7,
wherein at least a portion of the spinner-mounted cylindrical portion (61), the inner circumferential flange (71), the flange connection portion (73), or the outer circumferential flange (72) has a structure dividable into at least two parts in a circumferential direction centered at the axis (O) of the blade (4), and
wherein sections into which the at least one portion is divided are joined to one another at respective ends of the sections by adhesion or bolt fastening.

9. The wind turbine power generating apparatus according to any one of claims 4 to 7,
wherein at least a portion of the spinner-mounted cylindrical portion (61), the inner circumferential flange (71), the flange connection portion (73) or the outer circumferential flange (72) has a structure dividable into at least two parts in a circumferential direction centered at the axis (O) of the blade (4), and
wherein sections into which the at least one portion is divided are joined to one another at respective ends of the sections overlapped with each other.

10. The wind turbine power generating apparatus according to claim 9,
wherein a gap is formed between an outer circumferential surface of the spinner-mounted cylindrical portion (61) and an inner circumferential surface of the outer circumferential flange (72),
wherein at least one of the spinner-mounted cylindrical portion (61) or the outer circumferential flange (72) has a structure dividable in the circumferential direction, and
wherein the sections are overlapped with each other so that a joint between the sections has a flat surface facing the gap, in the at least one of the spinner-mounted cylindrical portion (61) or the outer circumferential flange (72).

11. The wind turbine power generating apparatus according to any one of claims 1 to 10,
wherein the spinner-mounted cylindrical portion (61) is formed as a separate piece from the tubular part (21), and
wherein the spinner-mounted cylindrical portion (61) is joined to the tubular part (21) by adhesion or by flange connection.

12. The wind turbine power generating apparatus according to any one of claims 1 to 11,
wherein the spinner (2) is dividable into at least two sections, and
wherein the spinner (2) has at least one dividing plane (94) which extends along the plane (M).

## Patentansprüche

1. Windturbinen-Energieerzeugungsvorrichtung, umfassend:
wenigstens ein Blatt (4),
eine Nabe (3), an der das wenigstens eine Blatt (4) drehbar montiert ist, und
eine Propellorhaube (2), die so angeordnet ist, dass sie die Nabe (3) bedeckt, wobei die Propellorhaube einen rohrförmigen Teil (21) aufweist, der sich um eine Drehachse (O) der Nabe (3) erstreckt, und der eine Öffnung (22) aufweist, durch die sich das Blatt (4) erstreckt,
wobei der rohrförmige Teil (21) der Propellorhaube (2) eine Form derart hat, dass, wenn ein Schnitt des rohrförmigen Teils (21) und eines virtuellen Zylinders (30), der die Öffnung (22) umgibt und sich entlang eines Blattfußes (4a) des Blattes (4) erstreckt, auf eine Ebene (M) projiziert wird, die eine Achse (P) des Blattes (4) und die Drehachse (O) umfasst, eine Projektionslinie (32, 32', 32") des Schnitts innerhalb eines Bereichs liegt, der definiert wird von einer Referenzlinie (36), die gegenüberliegende Enden (40, 42) der Projektionslinie (32, 32', 32") verbindet, und einer Referenzkurve (34, 34', 34"), welche eine Schnittlinie, projiziert auf die Ebene (M), des virtuellen Zylinders (30) ist, und einem Ort (21a, 21b) der Referenzlinie (36), der um die Drehachse (O) rotiert,
wobei der rohrförmige Teil (21) eine Wölbung zumindest um die Öffnung (22) aufweist, wobei sich die Wölbung vom Ort (21a, 21b) in mindestens einem Teil einer zentralen Zone zwischen den gegenüberliegenden Enden (40, 42) der Projektionslinie (32, 32', 32") in Bezug auf eine Richtung der Drehachse (O) der Nabe (3) nach außen wölbt,
wobei der rohrförmige Teil (21) eine Querschnittskontur entlang einer Ebene orthogonal zur Drehachse (O) der Nabe (3) in dem mindestens einen Teil der zentralen Zone aufweist, wobei die Querschnittskontur eine Distanz von der Drehachse (O) aufweist, die in der Umfangsrichtung der Drehachse variiert, und
wobei eine erste Distanz (l₁) zwischen der Drehachse (O) und der Querschnittskontur an einer ersten Position (45) länger ist als eine zweite Distanz (l₂) zwischen der Drehachse (O) und der Querschnittskontur an einer zweiten Position (46), wobei die zweite Position (46) weiter von der Öffnung (22) entfernt positioniert ist als es die erste Position (45) ist.

2. Windturbinen-Energieerzeugungsvorrichtung nach Anspruch 1,
wobei im rohrförmigen Teil (21) ein Wölbungsbetrag der Wölbung, die sich von dem Ort (21a, 21b) nach außen wölbt, mit einer Zunahme der Distanz von den gegenüberliegenden Enden (40, 42) der Projektionslinie (32, 32', 32") zumindest um die Öffnung (22) und in wenigstens einem Teil der zentralen Zone zunimmt.

3. Windturbinen-Energieerzeugungsvorrichtung nach Anspruch 1 oder 2,
wobei der rohrförmige Teil (21) eine zylindrische Form oder eine Kegelstumpfform hat, so dass die Projektionslinie (32, 32', 32") mit der Referenzkurve (34, 34', 34") zusammenfällt,
wobei die Propellorhaube (2) einen vorstehenden Abschnitt (27) aufweist, der entlang eines Randes (23) der Öffnung (22) des rohrförmigen Teils (21) angeordnet ist, wobei sich der vorstehende Abschnitt (27) zu einer Spitze des Blattes (4) von dem rohrförmigen Teil (21) erstreckt, und
wobei der vorstehende Abschnitt (27) vom rohrförmigen Teil (21) um eine Distanz vorsteht, die entlang des Randes (23) der Öffnung (22) derart variiert, dass sich eine Kantenfläche des vorstehenden Abschnitts (27), die auf einer Blattspitzenseite angeordnet ist, über eine Ebene orthogonal zur Achse (P) des Blattes (4) erstreckt.

4. Windturbinen-Energieerzeugungsvorrichtung nach einem der Ansprüche 1 bis 3,
wobei die Propellorhaube (2) ferner einen an der Propellorhaube montierten zylindrischen Abschnitt (61) aufweist, der über einen gesamten Umfang eines Randes (23) der Öffnung (22) des rohrförmigen Teils (21) angeordnet ist und der sich zur Spitze des Blattes (4) erstreckt,
wobei das Blatt (4) umfasst:
einen Innenumfangsflansch (71) mit einer zylindrischen Form, der an einer Außenumfangsfläche des Blattfußes (4a) montiert ist,
einen Flanschverbindungsabschnitt (73), der sich vom Innenumfangsflansch (71) nach außen in einer radialen Richtung des Blattes (4) erstreckt, und
einen Außenumfangsflansch (72), der sich vom Flanschverbindungsabschnitt (73) zur Propellorhaube (2) erstreckt, und
wobei der Außenumfangsflansch (72) außerhalb des an der Propellorhaube montierten zylindrischen Abschnitts (61) in der Umfangsrichtung angeordnet ist, so dass zumindest ein Teil des Außenumfangsflansches (72) mit dem an der Propellorhaube montierten zylindrischen Abschnitt (61) in einer Richtung der Achse (O) des Blattes (4) überlappt.

5. Windturbinen-Energieerzeugungsvorrichtung nach Anspruch 4,
wobei eine Außenumfangsseite des Flanschverbindungsabschnitts (73) zur Propellorhaube (2) geneigt ist.

6. Windturbinen-Energieerzeugungsvorrichtung nach Anspruch 4 oder 5,
wobei die Propellorhaube (2) einen an der Propellorhaube montierten Vertiefungsabschnitt (62) aufweist, der so angeordnet ist, dass er sich nach außen in der radialen Richtung des Blattes (4) von dem an der Propellorhaube montierten zylindrischen Abschnitt (61) erstreckt und gebildet ist, um einen Querschnitt einer Vertiefungsform in der radialen Richtung des Blattes (4) zu haben, und
wobei der an der Propellorhaube montierte Vertiefungsabschnitt (62) so angeordnet ist, dass eine vertiefte Fläche des an der Propellorhaube montierten Vertiefungsabschnitts (62) einem distalen Ende des Außenumfangsflansches (72) zugewandt und von diesem beabstandet ist.

7. Windturbinen-Energieerzeugungsvorrichtung nach einem der Ansprüche 4 bis 6,
wobei das Blatt (4) aus einem Material gebildet ist, das einen faserverstärkten Verbundstoff umfasst, und
wobei der Innenumfangsflansch (71) an dem Blatt (4) mit einem Klebmittel montiert ist.

8. Windturbinen-Energieerzeugungsvorrichtung nach einem der Ansprüche 4 bis 7,
wobei mindestens ein Abschnitt von dem an der Propellorhaube montierten zylindrischen Abschnitt (61), dem Innenumfangsflansch (71), dem Flanschverbindungsabschnitt (73) oder dem Außenumfangsflansch (72) eine Struktur aufweist, die in mindestens zwei Teile in einer Umfangsrichtung, zentriert an der Achse (O) des Blattes (4), teilbar ist, und
wobei Sektionen, in die der mindestens eine Abschnitt geteilt ist, miteinander an jeweiligen Enden der Sektionen durch Adhäsion oder Bolzenbefestigung verbunden sind.

9. Windturbinen-Energieerzeugungsvorrichtung nach einem der Ansprüche 4 bis 7,
wobei mindestens ein Abschnitt von dem an der Propellorhaube montierten zylindrischen Abschnitt (61), dem Innenumfangsflansch (71), dem Flanschverbindungsabschnitt (73) oder dem Außenumfangsflansch (72) eine Struktur aufweist, die in mindestens zwei Teile in einer Umfangsrichtung, zentriert an der Achse (O) des Blattes (4), teilbar ist, und
wobei Sektionen, in die der mindestens eine Abschnitt geteilt ist, miteinander an jeweiligen Enden der Sektionen einander überlappend verbunden sind.

10. Windturbinen-Energieerzeugungsvorrichtung nach Anspruch 9,
wobei ein Spalt zwischen einer Außenumfangsfläche des an der Propellorhaube montierten zylindrischen Abschnitts (61) und einer Innenumfangsfläche des Außenumfangsflansches (72) gebildet ist,
wobei mindestens einer von dem an der Propellorhaube montierten zylindrischen Abschnitt (61) oder dem Außenumfangsflansch (72) eine Struktur aufweist, die in der Umfangsrichtung teilbar ist, und
wobei die Sektionen einander derart überlappen sind, dass eine Verbindung zwischen den Sektionen eine flache, dem Spalt zugewandte Fläche, in dem mindestens einen von dem an der Propellorhaube montierten zylindrischen Abschnitt (61) oder dem Außenumfangsflansch (72) aufweist.

11. Windturbinen-Energieerzeugungsvorrichtung nach einem der Ansprüche 1 bis 10,
wobei der an der Propellorhaube montierte zylindrische Abschnitt (61) als von dem rohrförmigen Teil (21) getrenntes Stück gebildet ist und
wobei der an der Propellorhaube montierte zylindrische Abschnitt (61) mit dem rohrförmigen Teil (21) durch Adhäsion oder durch eine Flanschverbindung verbunden ist.

12. Windturbinen-Energieerzeugungsvorrichtung nach einem der Ansprüche 1 bis 11,
wobei die Propellorhaube (2) in mindestens zwei Sektionen teilbar ist und
wobei die Propellorhaube (2) mindestens eine Teilungsebene (94) aufweist, die sich entlang der Ebene (M) erstreckt.

## Revendications

1. Appareil de génération de puissance d'éolienne comprenant :
au moins une aube (4) ;
un moyeu (3) sur lequel la au moins une aube (4) est montée en rotation ; et
un capot (2) disposé afin de recouvrir le moyeu (3), dans lequel le capot comprend une partie tubulaire (21) qui s'étend autour d'un axe de rotation (0) du moyeu (3) et qui a une ouverture (22) à travers laquelle l'aube (4) s'étend,
dans lequel la partie tubulaire (21) du capot (2) a une forme de sorte que, lorsqu'une intersection de la partie tubulaire (21) et d'un cylindre virtuel (30) entourant l'ouverture (22) et s'étendant le long d'une emplanture d'aube (4a) de l'aube (4) est projetée sur un plan (M) comprenant un axe (P) de l'aube (4) et l'axe de rotation (0), une ligne de projection (32, 32', 32'') de l'intersection est dans une plage définie par une ligne de référence (36) raccordant les extrémités opposées (40, 42) de la ligne de projection (32, 32', 32'') et une courbe de référence (34, 34', 34'') qui est une ligne d'intersection, projetée sur le plan (M) du cylindre virtuel (30) et un lieu géométrique (21a, 21b) de la ligne de référence (36) tournant autour de l'axe de rotation (0),
dans lequel la partie tubulaire (21) a un renflement au moins autour de l'ouverture (22), le renflement se renflant vers l'extérieur à partir du lieu géométrique (21a, 21b) dans au moins une partie d'une région centrale entre les extrémités opposées (40, 42) de la ligne de projection (32, 32', 32'') par rapport à une direction de l'axe de rotation (0) du moyeu (3),
dans lequel la partie tubulaire (21) a un contour transversal le long d'un plan orthogonal à l'axe de rotation (0) du moyeu (3), dans la au moins une partie de la région centrale, le contour transversal ayant une distance par rapport à l'axe de rotation (0) qui varie dans la direction circonférentielle de l'axe de rotation, et
dans lequel une première distance (l₁) entre l'axe de rotation (0) et le contour transversal dans une première position (45) est plus longue qu'une seconde distance (l₂) entre l'axe de rotation (0) et le contour transversal dans une seconde position (46), la seconde position (46) étant positionnée plus loin de l'ouverture (22) que ne l'est la première position (45).

2. Appareil de génération de puissance d'éolienne selon la revendication 1,
dans lequel, dans la partie tubulaire (21), une quantité de renflement du renflement se renflant vers l'extérieur à partir du lieu géométrique (21a, 21b) augmente avec une augmentation sur une distance à partir des extrémités opposées (40, 42) de la ligne de projection (32, 32', 32''), au moins autour de l'ouverture (22) et dans au moins une partie de la région centrale.

3. Appareil de génération de puissance d'éolienne selon la revendication 1 ou 2,
dans lequel la partie tubulaire (21) a une forme cylindrique ou une forme tronconique de sorte que la ligne de projection (32, 32', 32'') coïncide avec la courbe de référence (34, 34', 34''),
dans lequel le capot (2) comprend une partie en saillie (27) disposée le long d'un bord (23) de l'ouverture (22) de la partie tubulaire (21), la partie en saillie (27) s'étendant vers une pointe de l'aube (4) à partir de la partie tubulaire (21), et
dans lequel la partie en saillie (27) fait saillie à partir de la partie tubulaire (21) par une distance qui varie le long du bord (23) de l'ouverture (22) de sorte qu'une surface de bord de la partie en saillie (27) disposée sur un côté de pointe d'aube s'étend sur un plan orthogonal à l'axe (P) de l'aube (4).

4. Appareil de génération de puissance d'éolienne selon l'une quelconque des revendications 1 à 3,
dans lequel le capot (2) comprend en outre une partie cylindrique montée sur le capot (61) qui est disposée sur toute la périphérie d'un bord (23) de l'ouverture (22) de la partie tubulaire (21) et qui s'étend vers la pointe de l'aube (4),
dans lequel l'aube (4) comprend :
une bride circonférentielle interne (71) d'une forme cylindrique montée sur une surface circonférentielle externe de l'emplanture d'aube (4a),
une partie de raccordement de bride (73) s'étendant à partir de la bride circonférentielle interne (71) vers l'extérieur dans une direction radiale de l'aube (4) ; et
une bride circonférentielle externe (72) s'étendant à partir de la partie de raccordement de bride (73) vers le capot (2), et
dans lequel la bride circonférentielle externe (72) est disposée à l'extérieur de la partie cylindrique montée sur le capot (61) dans la direction circonférentielle, de sorte qu'au moins une partie de la bride circonférentielle externe (72) recouvre la partie cylindrique montée sur le capot (61) dans une direction de l'axe (0) de l'aube (4).

5. Appareil de génération de puissance d'éolienne selon la revendication 4,
dans lequel un côté circonférentiel externe de la partie de raccordement de bride (73) est incliné vers le capot (2).

6. Appareil de génération de puissance d'éolienne selon la revendication 4 ou 5,
dans lequel le capot (2) comprend une partie d'évidement montée sur le capot (62) disposée afin de s'étendre vers l'extérieur dans la direction radiale de l'aube (4) à partir de la partie cylindrique montée sur le capot (61) et formée pour avoir une section transversale en forme d'évidement dans la direction radiale de l'aube (4), et
dans lequel la partie d'évidement montée sur le capot (62) est disposée de sorte qu'une surface évidée de la partie d'évidement montée sur le capot (62) est orientée en face de et espacée d'une extrémité distale de la bride circonférentielle externe (72).

7. Appareil de génération de puissance d'éolienne selon l'une quelconque des revendications 4 à 6,
dans lequel la bride (4) est formée à partir d'un matériau comprenant un composite renforcé en fibres, et
dans lequel la bride circonférentielle interne (71) est montée sur l'aube (4) avec un agent adhésif.

8. Appareil de génération de puissance d'éolienne selon l'une quelconque des revendications 4 à 7,
dans lequel au moins une partie de la partie cylindrique montée sur le capot (61), la bride circonférentielle interne (71), la partie de raccordement de bride (73) ou la bride circonférentielle externe (72) a une structure divisible en au moins deux parties dans une direction circonférentielle centrée au niveau de l'axe (0) de l'aube (4), et
dans lequel les sections dans lesquelles la au moins une partie est divisée, sont assemblées entre elles, aux extrémités respectives des sections par adhésion ou fixation par boulon.

9. Appareil de génération de puissance d'éolienne selon l'une quelconque des revendications 4 à 7,
dans lequel au moins une partie de la partie cylindrique montée sur le capot (61), la bride circonférentielle interne (71), la partie de raccordement de bride (73) ou la bride circonférentielle externe (72) a une structure divisible en au moins deux parties dans une direction circonférentielle centrée au niveau de l'axe (0) de l'aube (4), et
dans lequel les sections dans lesquelles la au moins une partie est divisée, sont assemblées entre elles au niveau des extrémités respectives des sections qui se chevauchent les unes par rapport aux autres.

10. Appareil de génération de puissance d'éolienne selon la revendication 9,
dans lequel un espace est formé entre une surface circonférentielle externe de la partie cylindrique montée sur le capot (61) et une surface circonférentielle interne de la bride circonférentielle externe (72),
dans lequel au moins l'une parmi la partie cylindrique montée sur le capot (61) ou la bride circonférentielle externe (72) a une structure divisible dans la direction circonférentielle, et
dans lequel les sections se chevauchent entre elles de sorte qu'un joint entre les sections a une surface plate faisant face à l'espace, dans la au moins une parmi la partie cylindrique montée sur le capot (61) ou la bride circonférentielle externe (72).

11. Appareil de génération de puissance d'éolienne selon l'une quelconque des revendications 1 à 10,
dans lequel la partie cylindrique montée sur le capot (61) est formée comme une pièce séparée de la partie tubulaire (21), et
dans lequel la partie cylindrique montée sur le capot (61) est assemblée à la partie tubulaire (21) par adhésion ou par raccordement par bride.

12. Appareil de génération de puissance d'éolienne selon l'une quelconque des revendications 1 à 11,
dans lequel le capot (2) est divisible en au moins deux sections, et
dans lequel le capot (2) a au moins un plan de division (94) qui s'étend le long du plan (M).
